## Europäisches Patentamt

## European Patent Office

## Office européen des brevets

(11) Veröffentlichungsnummer: **0 196 483**

**B1**

(12) **EUROPÄISCHE PATENTSCHRIFT**

(45) Veröffentlichungstag der Patentschrift:
**21.09.88**

(21) Anmeldenummer: **86102888.4**

(22) Anmeldetag: **05.03.86**

(51) Int. Cl.⁴: **B 25 J 9/18,** G 05 B 19/42

(30) Priorität: **29.03.85 DE 3511616**

(43) Veröffentlichungstag der Anmeldung:
**08.10.86 Patentblatt 86/41**

(45) Bekanntmachung des Hinweises auf die Patenterteilung:
**21.09.88 Patentblatt 88/38**

(84) Benannte Vertragsstaaten:
**DE FR IT SE**

(56) Entgegenhaltungen:
EP-A-0 071 777
EP-A-0 120 677

**WESCON TECHNICAL PAPER; 4/2, Band 26,
September 1982, Seiten 1-6, Hollywood North,
Western Periodicals Co., US; A.M. KARKLINS et
al.: "A microprocessor's role in the space shuttle
remote manipulator arm"
ELEKTRIE, Band 36, Nr. 12, 1982, Seiten 641-643, VEB
Verlag Technik, Berlin, DE; M. MICHAILOFF:
"Optoelektronische Informationsgewinnung in
Automatisierungsanlagen"**

(73) Patentinhaber: **Siemens Aktiengesellschaft Berlin
und München, Wittelsbacherplatz 2, D-8000
München 2 (DE)**

(72) Erfinder: **Müller, Peter, Dipl.- Ing., Güssbettstrasse
9, D-8551 Hausen (DE)**

(54) Lageregelsystem für rechnergesteuerte Arbeitsmaschinen.

## Beschreibung

Die Erfindung bezieht sich auf ein Lageregelsystem für rechnergesteuerte Arbeitsmaschinen, wie z. B. Werkzeugmaschinen oder Industrieroboter. Zur Lageistwerterfassung ist es z. B. bei Werkzeugmaschinen oder Robotern bekannt, mit dem zu bewegenden Maschinenteil direkt oder indirekt einen Lageistwertgeber, z. B. einen Inkrementalgeber zu kuppeln und die von diesem Geber gelieferten Pulse in einer entsprechenden Rechnersteuerung als Istwert zu summieren. Die in den jeweiligen Abtastperioden der Lageregelung angefallenen summierten Istwerte werden dann zum betreffenden Abtastzeitpunkt in der Rechnersteuerung in an sich bekannter Weise mit den Sollwerten verglichen und daraus Stellbefehle für die Antriebe der Maschinenteile gebildet. Die Momentanwertverarbeitung im Rechner kann dabei in einem festen Taktzyklus, z. B. alle zwei Millisekunden, vorgenommen werden. Bei hochauflösenden Meßgebern, z. B. Inkrementalmeßgebern mit Impulsvervielfachung steigt die Übertragungsfrequenz bis in den Megahertzbereich. Dadurch wird die Übertragung der seriellen Pulse über Datenleitungen äußerst kritisch bzgl. Störungen und Schaltelementen. Eine hochfrequenzmäßige Entstörung und Entkopplung ist relativ aufwendig.

Die Aufgabe der vorliegenden Erfindung besteht darin, bei einem Lageregelsystem, bei der elektrische Pulse mit hoher Frequenz vom Lageistwertgeber geliefert werden, dafür zu sorgen, daß herkömmliche Übertragungsstrecken ohne besondere Vorkehrungen vervendet werden können.

Diese Aufgabe wird erfindungsgemäß durch folgende Merkmale gelöst:

Unmittelbar in oder an den Lageistwertgebern sind Summierglieder für die aus der Bewegung des Lageistwertgebers abgeleiteten elektrischen Pulse vorgesehen und die Rechnersteuerung übernimmt in einem vorgegebenen Zeitraster den im betreffenden Summierglied anstehenden Lageistwert über einen seriellen Bus zur Weiterverarbeitung.

Bei der vorliegenden Erfindung erfolgt also die Summation der Einzelpulse im oder am Geber. Der Geber stellt dann der Steuerung die gesammelte Information im Taktraster der Verarbeitung zur Verfügung. Das Übertragungsproblem wird dadurch wesentlich entschärft. Wenn man z. B. davon ausgeht, daß z. B. der Taktraster zwei Millisekunden beträgt, so ist verständlich, daß die Übertragung eines z. B. 12 Bit breiten Wortes in serieller Form in einer sehr kurzen Zeitspanne ohne großen Aufwand vorgenommen werden kann.

Mit Vorteil wird der serielle Bus so ausgebildet, daß mehrere Lage-Istwertgeber anschließbar sind, die der Reihe nach vom Rechner abgefragt werden. Nimmt man als seriellen Bus einen Lichtleiter, so kommt man für die Datenübertragung mit nur einem Kabel aus. Dies ist insbesondere wichtig bei Robotern, weil hierdurch die innerhalb der Gelenke zu führende Zahl von Leitungen ganz erheblich reduziert wird.

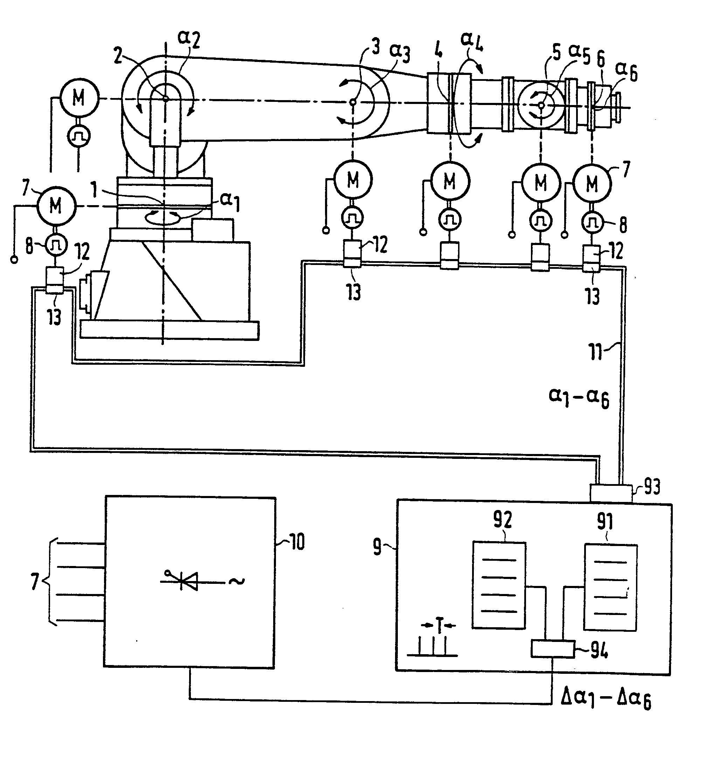

Anhand eines in der Zeichnung dargestellten Ausführungsbeispiels sei die Erfindung näher erläutert:

Der in Der Zeichnung schematisch dargestellte Gelenk-Industrieroboter hat sechs Gelenke 1 bis 6, dadurch die Drehungen in sechs Achsen mit den Winkeln $\alpha 1$ bis $\alpha 6$ möglich sind. Die zum Antrieb der einzelnen Gelenke 1 bis 6 dienenden permanenterregten Drehstrommotoren 7 sind zusammen mit den zugehörigen Untersetzungsgetrieben und den an ihnen angeflanschten Weggebern 8 in Form von Inkrementalgebern in die Gelenke integriert und nur der Deutlichkeit halber herausgezeichnet. Unmittelbar am elektrischen Ausgang jedes Impulsgebers 8 ist ein elektrischer Zähler 12, z. B. mit 26 Bit angebracht, der den jeweils aktuellen, durch Summation erzielten Istwert enthält. Die einzelnen Zählerstände dieser Zähler 12 sind in einem vorgegebenen Taktraster T von z. B. zwei Millisekunden über Ankoppelstellen 13 der Reihe nach über einen seriellen Bus 11 in Form eines Lichtleiters abrufbar. Die einzelnen Zählerstände gelangen der Reihe nach über eine Ankoppelstelle 93 in ein Register 91 der Rechnersteuerung 9 und werden dort als Istwerte für die betreffenden Achsen zur Verfügung gestellt. Im Abtastzyklus von z. B. zwei Millisekunden werden die so erhaltenen Istwerte mit den in einem Speicher 92 stehenden Sollwerten verglichen - Vergleicher 94 - und die entsprechenden Differenzen $\Delta \alpha 1$ bis $\Delta \alpha 6$ zur Steuerung der Spannungsversorgungsgeräte 10 für die Motoren 7 benutzt. Eine Rechnersteuerung dieser Art ist bekannt, beispielsweise aus der Zeitschrift Siemens-Energietechnik 1981, Seiten 285 bis 289. In an sich bekannter Weise können die von dem Lageistwertgeber erhaltenen Istwertinformationen auch zur Drehrichtungsbestimmung und/oder zur Drehzahlerfassung herangezogen werden. Außerdem wird durch die Vorverarbeitung im Geber und durch die Pufferung die Verwirklichung eines absoluten Meßsystems sehr erleichtert.

Zusätzlich können in einem so abgeänderten Geber auch gleichzeitig die Logik für die Geberüberwachung und die Logik für das Referenzpunktfahren mit integriert werden.

An den Lageistwerten können ferner auch die Befehle zur Kommutierungsschaltung von z. B. Synchronmotoren abgeleitet werden, die zur Bewegung der Maschinenteile dienen.

Bezugszeichenliste

1 Gelenk
2 Gelenk
3 Gelenk
4 Gelenk
5 Gelenk
6 Gelenk
7 Drehstrommotoren
8 Weggeber (Inkrementalgebern; Impulsgeber)
9 Rechnersteuerung
10 Spannungsversorgungsgeräte
11 Bus (Lichtleiter)
12 Zähler
13 Ankoppelstellen

91 Register
92 Speicher
93 Ankoppelstelle
94 Vergleicher

**Patentansprüche**

1. Lageregelsystem für rechnergesteuerte Arbeitsmaschinen, bei dem
a) mit bewegten Maschinenteilen verbundene Lageistwertgeber (7) vorhanden sind,
b) die Lageistwertgeber über Datenleitungen (11) mit der Rechnersteuerung (9) verbunden sind und
c) die Rechnersteuerung die Lageistwerte mit den entsprechenden Sollwerten vergleicht und hieraus Stellbefehle für die Antriebe der bewegten Maschinenteile ableitet,
gekennzeichnet durch folgende Merkmale:
d) unmittelbar in oder an den Lageistwertgebern sind Summierglieder (12) für die aus der Bewegung der Lageistwertgeber (8) abgeleitete elektrische Pulse vorgesehen und
e) die Rechnersteuerung (9) übernimmt in einem vorgegebenen Zeitraster den im betreffenden Summierglied (12) anstehenden Lageistwert über einen seriellen Bus (11) zur Weiterverarbeitung.

2. Lageregelsystem nach Anspruch 1, dadurch gekennzeichnet, daß ein serieller Bus (11) vorgesehen ist, an den mehrere Lageistwertgeber (8) anschließbar sind.

3. Lageregelsystem nach Anspruch 1 und 2, dadurch gekennzeichnet, daß der serielle Bus (11) mit einem Lichtleiterkabel aufgebaut ist.

4. Lageregelsystem nach Anspruch 1 bis 3, dadurch gekennzeichnet, daß aus der Änderung der Lageistwerte Geschwindigkeitswerte ableitbar sind.

5. Lageregelsystem nach Anspruch 1, gekennzeichnet durch die Ableitung von Kommutierungsumschaltbefehlen für die elektrischen Antriebe aus den Lageistwerten.

**Claims**

1. A position control system for computer-controlled production machines, in which:
a) actual-position detectors (7) are connected to movable machine parts,
b) the actual-position detectors are connected to the computer control (9) by data lines (11), and
c) the computer control compares the actual-position values with the corresponding desired values and derives therefrom control commands for driving the moveable machine parts, characterised by the following features:
d) summators (12) for the electrical pulses derived from the movement of the actual-position detectors (8) are provided directly in or on the actual-position detectors, and
e) the computer control (9) accepts the actual-position values present in the respective summators (12) in a predetermined timing code through a serial bus (11) for further processing.

2. A position-control system according to claim 1, characterised in that a serial bus (11) is provided to which a plurality of actual-position detectors (8) can be connected.

3. A position-control system according to claim 1 or claim 2, characterised in that the serial bus (11) is formed by an optical cable.

4. A position-control system according to any one of claims 1 to 3, characterised in that speed values can be derived from the variation of the actual-position values.

5. A position-control system according to claim 1, characterised by the derivation of commutation switching commands for the electrical drive from the actual-position values.

**Revendications**

1. Système de réglage de la position pour des machines de production d'un travail, assistés par ordinateur, dans lequel:
a) sont prévus des générateurs (7) de la valeur instantanée de la position, qui sont reliés à des éléments mobiles de la machine,
b) les générateur de la valeur instantanée sont reliés, par l'intermédiaire de lignes de transmission de données (11), à la commande de l'ordinateur (9), et
c) la commande de l'ordinateur compare les valeurs instantanées de la position aux valeurs de consigne correspondantes et en déduit des instructions de réglage pour les dispositifs d'entraînement des éléments de machine déplacés, remarquable par les caractéristiques suivantes:
d) directement dans ou au niveau des générateurs des valeurs instantanées de la position, sont prévues des unités d'addition (12) pour les impulsions électriques dérivées du déplacement des générateurs des valeurs instantanées de la position (8), et
e) la commande de l'ordinateur (9) prend en charge, suivant une trame temporelle déterminée, la valeur instantanée de la position qui est présente dans l'unité d'addition correspondante (12), par l'intermédiaire d'un bus série (11) en vue du post-traitement.

2. Système de réglage de la position selon la revendication 1, caractérisé par le fait qu'il est prévu un bus série (11) auquel sont susceptibles d'être reliés plusieurs générateurs de valeurs instantanées de la position (8).

3. Système de réglage de la position selon la revendication 1 et 2, caractérisé par le fait que le bus série (11) est constitué avec un câble à guide d'onde de lumière.

4. Système de réglage de la position selon la revendication 1 à 3, caractérisé par le fait qu'à partir de la modification des valeurs instantanées de la position, on peut déduire des valeurs relatives à la vitesse.

5. Système de réglage de la position selon la revendication 1, caractérisé par le fait qu'à partir des valeurs instantanées de la position, on dérive les instructions de commutation d'inversion pour les dispositifs d'entraînement électriques.